(19) Europäisches Patentamt
European Patent Office
Office européen des brevets

(11) **EP 3 209 011 B1**

(12) **EUROPEAN PATENT SPECIFICATION**

(45) Date of publication and mention
of the grant of the patent:
**04.12.2019 Bulletin 2019/49**

(51) Int Cl.:
*H04N 1/405* *(2006.01)*    *H04N 1/00* *(2006.01)*

(21) Application number: **17156446.1**

(22) Date of filing: **16.02.2017**

(54) **IMAGE FORMING APPARATUS CORRECTING TONE CHARACTERISTICS AND METHOD FOR CONTROLLING IMAGE FORMING APPARATUS**

BILDERZEUGUNGSVORRICHTUNG ZUR KORREKTUR VON FARBTONEIGENSCHAFTEN UND VERFAHREN ZUR STEUERUNG DER BILDERZEUGUNGSVORRICHTUNG

APPAREIL DE FORMATION D'IMAGES CORRIGEANT LES CARACTÉRISTIQUES DE TON ET PROCÉDÉ DE COMMANDE D'APPAREIL DE FORMATION D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2016 JP 2016030168**

(43) Date of publication of application:
**23.08.2017 Bulletin 2017/34**

(73) Proprietor: **Canon Kabushiki Kaisha Tokyo 146-8501 (JP)**

(72) Inventor: **ITAGAKI, Tomohisa Ohta-ku, Tokyo 146-8501 (JP)**

(74) Representative: **Houle, Timothy James Canon Europe Ltd European Patent Department 3 The Square Stockley Park Uxbridge, Middlesex UB11 1ET (GB)**

(56) References cited:
**EP-A1- 2 733 917       EP-A2- 2 299 686 US-A1- 2012 051 768**

**Description**

BACKGROUND OF THE INVENTION

Field of the Invention

The present invention relates to image density adjustment control.

Description of the Related Art

An electrophotographic image forming apparatus forms an electrostatic latent image on a photosensitive member based on image data, and develops the electrostatic latent image with a developing agent in a development unit to form an image. The density of the image to be formed by the image forming apparatus is known to change according to the state of the developing agent in the development unit and the temperature and humidity inside the image forming apparatus.

Accordingly, to match the density of an image to be formed on a sheet to a desired density, the image forming apparatus forms measuring images on a sheet, measures the measuring images on the sheet with a sensor, and performs calibration for adjusting image forming conditions based on measurement results of the sensor.

For example, an image forming apparatus discussed in Japanese Patent Application Laid-Open No. 2011-199409 enables a user to select the number of sheets on which measuring images are to be formed, measures the measuring images formed on a plurality of sheets with sensors, and generates image forming conditions based on measurement results. The image forming apparatus discussed in Japanese Patent Application Laid-Open No. 2011-199409 prints measuring images corresponding to all types of halftoning on sheets as many as the number of sheets selected by the user. For example, an image forming apparatus that perform five different types of halftoning forms measuring images on 50 sheets in a case where ten is selected as the number of sheets.

EP2733917A discloses controlling the number of patches to be printed based on a frequency of usage of several image processing methods, provided by an image forming apparatus, in order to save consumables.

SUMMARY OF THE INVENTION

According to an aspect of the present invention, there is provided an image forming apparatus as specified in claims 1 to 11.

Further features of the present invention will become apparent from the following description of exemplary embodiments with reference to the attached drawings.

BRIEF DESCRIPTION OF THE DRAWINGS

Fig. 1 is a cross-sectional view schematically illustrating an image forming apparatus.
Fig. 2 schematically illustrates an essential part of a sensor.
Fig. 3 is a control block diagram illustrating the image forming apparatus.
Fig. 4 is an enlarged view illustrating halftoned images.
Fig. 5 is a flowchart illustrating an image forming operation.
Fig. 6 illustrates an example of image data generated with a page description language.
Fig. 7 is a flowchart illustrating automatic tone correction.
Fig. 8 is a schematic view illustrating a test chart to be used for maximum density adjustment.
Fig. 9 illustrates a concept related to a method for adjusting an exposure intensity.
Fig. 10 is a schematic view illustrating a test chart to be printed to generate a tone correction table.
Fig. 11 illustrates a concept related to a method for generating a tone correction table.
Fig. 12 is a flowchart illustrating the method for generating a tone correction table.
Fig. 13 is a schematic view illustrating test charts printed by the image forming apparatus in a case where the number of sheets for a test chart corresponding to an image screen is set to one.
Fig. 14 is a schematic view illustrating test charts printed by the image forming apparatus in a case where the number of sheets for a test chart corresponding to the image screen is set to five.
Fig. 15 is a schematic view illustrating a modification of test charts printed by the image forming apparatus in a case where the number of sheets for a test chart corresponding to the image screen is set to five.
Fig. 16 is a schematic view illustrating another modification of test charts printed by the image forming apparatus in a case where the number of sheets for a test chart corresponding to the image screen is set to five.

Fig. 17 is a schematic view illustrating a screen for specifying the number of sheets for a test chart displayed on an operation unit.

DESCRIPTION OF THE EMBODIMENTS

(Image Forming Apparatus)

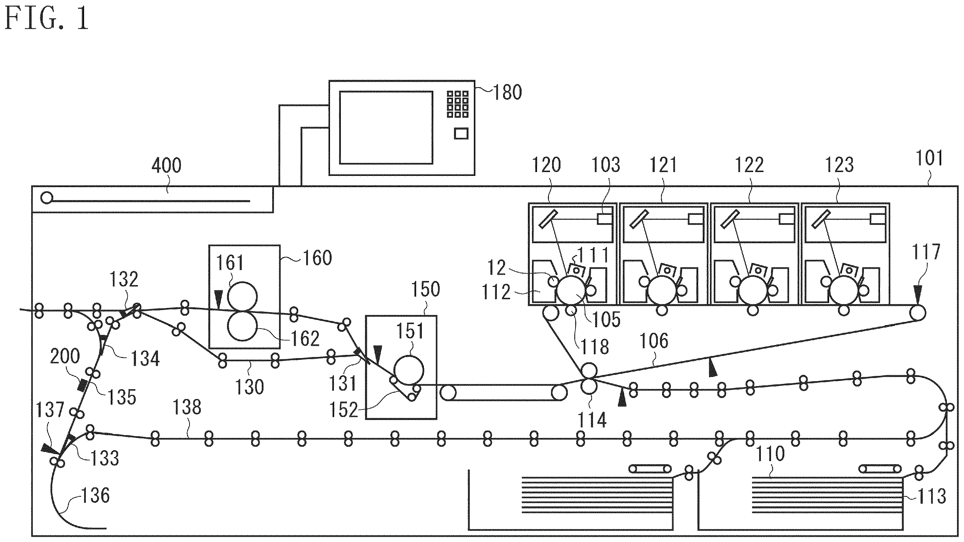

An image forming apparatus will be described below with reference to Fig. 1. An image forming apparatus 100 includes a printing unit 101, a reader unit 400, and an operation unit 180. The printing unit 101 includes four different stations 120, 121, 122, and 123 for forming images having respective color components. The station 120 forms a yellow image, the station 121 forms a magenta image, the station 122 forms a cyan image, and the station 123 forms a black image.

Since the four stations have the same configuration, the configuration of the station 120 for forming a yellow image will be described below. A photosensitive drum 105 is a photosensitive member having a photosensitive layer on the surface thereof. A charging unit 111 charges the photosensitive drum 105 so that the potential of the surface of the photosensitive drum 105 becomes a predetermined potential (charging potential). With a laser of an exposure apparatus 103 controlled based on image data scanning the photosensitive drum 105, an electrostatic latent image is formed on the surface of the photosensitive drum 105. A development unit 112 includes a container for storing a developing agent containing toner and a carrier having magnetism, and a rotatably driven developing sleeve 12 disposed in the above-described container to bear the developing agent. The development unit 112 develops an electrostatic latent image with the developing agent. With the configuration, a toner image is formed on the surface of the photosensitive drum 105.

An intermediate transfer belt 106 functions as an image bearing member for bearing toner images formed by the stations 120, 121, 122, and 123. A primary transfer roller 118 transfers a toner image on the photosensitive drum 105 onto the intermediate transfer belt 106 with a transfer voltage being applied to the primary transfer roller 118 by a power source unit (not illustrated). Toner images of respective colors formed by the stations 120, 121, 122, and 123 are transferred onto the intermediate transfer belt 106 in a superimposed way. Rotation of the intermediate transfer belt 106 conveys the toner images borne by the intermediate transfer belt 106 to a secondary transfer roller 114.

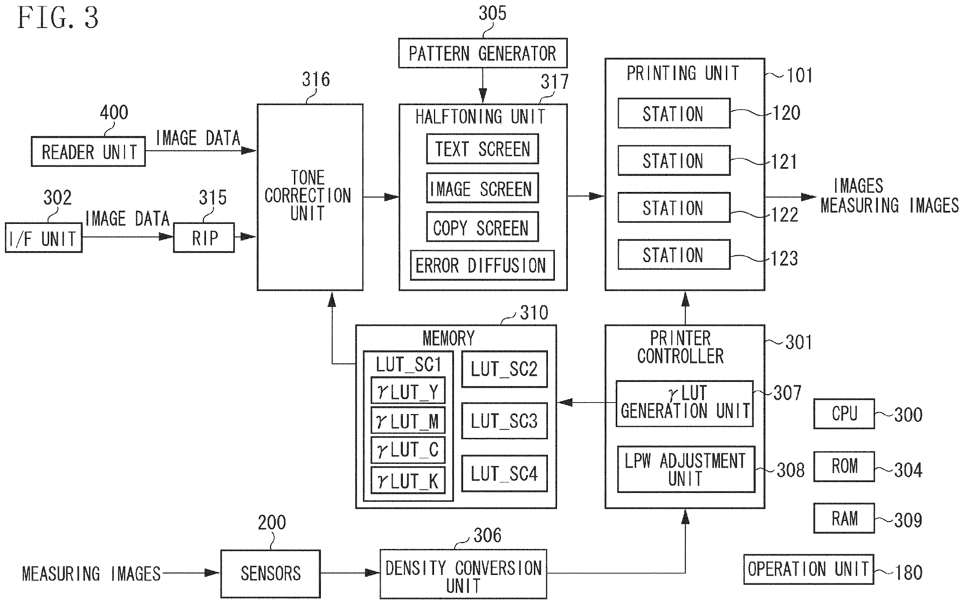

Around the intermediate transfer belt 106, a sensor 117 is disposed to measure the density of measuring images formed on the intermediate transfer belt 106. The sensor 117 is, for example, an optical sensor. The sensor 117 outputs signals corresponding to the amount of toner applied to the measuring images formed on the intermediate transfer belt 106. More specifically, the sensor 117 detects the density of the measuring images formed on the intermediate transfer belt 106. A central processing unit (CPU) 300 (Fig. 3) of the image forming apparatus 100 controls image forming conditions based on the results of measurement of the sensor 117 so that the density of the images formed by the stations 120, 121, 122, and 123 becomes a target density. The image forming conditions include the charging potential, the intensity of the laser of the exposure apparatus 103, the developing bias to be applied to the developing sleeve 12, and the transfer voltage to be applied to the primary transfer roller 118. The image forming apparatus 100 may control one of the plurality of image forming conditions, or adjust some or all of the plurality of image forming conditions.

A sheet 110 stored in a storage unit 113 is conveyed toward the secondary transfer roller 114 in synchronization with the toner image borne by the intermediate transfer belt 106. A transfer voltage is applied to the secondary transfer roller 114. The secondary transfer roller 114 transfers the toner image borne by the intermediate transfer belt 106 onto the sheet 110. The sheet 110 with the toner image transferred thereon is conveyed to a fixing unit 150.

The fixing unit 150 includes a fixing roller 151 having a heater for heating the sheet 110, and a pressure belt 152 for making the sheet 110 in pressure contact with the fixing roller 151. The fixing unit 150 heats and pressurizes the toner image transferred onto the sheet 110 to fix the toner image onto the sheet 110. A fixing unit 160 is disposed on the downstream side of the fixing unit 150 in the conveyance direction in which the sheet 110 is conveyed. The fixing unit 160 includes a fixing roller 161 having a heater for heating the sheet 110, and a pressure roller 162. For example, in a case where the gross of the toner image on the sheet 110 is to be increased, or an image is to be fixed onto the sheet 110, a thick paper requiring a large amount of heat for fixing, the sheet 110 that has passed through the fixing unit 150 is conveyed to the fixing unit 160.

In a case where an image is to be fixed onto the sheets 110 such as plain paper or thin paper, the sheet 110 that has passed through the fixing unit 150 is conveyed along a conveyance path 130 bypassing the fixing unit 160. To control whether the sheet 110 is to be conveyed to the fixing unit 160 or the sheet 110 is to be conveyed bypassing the fixing unit 160, the CPU 300 (Fig. 3) controls a flapper 131.

A flapper 132 is a guide member for switching the guidance destination of the sheet 110 between a conveyance path 135 and a conveyance path 139 to the outside. The sheet 110 conveyed along the conveyance path 135 is conveyed to a reversing unit 136. With a reversing sensor 137 provided in the conveyance path 135 detecting the trailing edge of the sheet 110, the conveyance direction of the sheet 110 is reversed.

A flapper 133 is a guide member for switching the guidance destination of the sheet 110 between a conveyance path 138 for two-sided image forming and the conveyance path 135. In a case where the face-down discharge mode is executed, the sheet 110 is conveyed again toward the conveyance path 135 and then discharged from the image forming apparatus 100.

In a case where the two-sided printing mode is executed, the sheet 110 is conveyed again along the conveyance path 138 toward the transfer roller 114. In a case where the two-sided printing mode is executed, after an image is fixed onto a first surface of the sheet 110, the sheet 110 is switched back by the reversing unit 136 and then conveyed along the conveyance path 138 toward the transfer roller 114. Then, an image is formed on a second surface of the sheet 110.

A flapper 134 is a guide member for guiding the sheet 110 to the conveyance path 139 for discharging the sheet 110 from the image forming apparatus 100. In a case where the sheet 110 is discharged with the sheet 110 facing down, the flapper 134 guides the sheet 110 that has been switched back by the reversing unit 136, to the conveyance path 139 for discharge. The sheet 110 is conveyed along the conveyance path 139 for discharge and then discharged to the outside of the image forming apparatus 100.

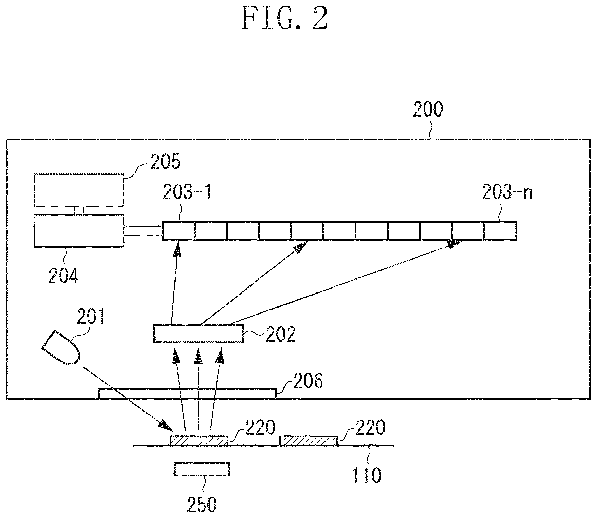

A sensor 200 for measuring a measuring image on the sheet 110 is disposed in the conveyance path 135. Four sensors 200 are disposed along the direction perpendicularly intersecting with the conveyance direction of the sheet 110, and can detect measuring images arranged in four columns. The configuration of each sensor 200 will be described below with reference to Fig. 2.

An operation unit 180 includes a liquid crystal display as a display unit, and a key input unit. The operation unit 180 is an interface used by the user to input the number of sheets for image printing and the printing mode. Using the operation unit 180, the user can select the one-sided printing mode or the two-sided printing mode, perform the face-down discharge mode, and select the monochrome mode or the color mode.

A reader unit 400 includes a unit having a light source, an optical system, and a charge coupled device (CCD) sensor, and a document positioning plate. The reader unit 400 reads an image of a document placed on the document positioning plate. The reader unit 400 performs a reading operation in a case where the user places a document on the document positioning plate and then presses a start button of the operation unit 180. In a case where the reading operation is performed, light emitted from the light source is reflected by the document placed on the document positioning plate, and the reflected light from the document is focused on the CCD sensor to form an image via the optical system such as a lens. With the reflected light from the document focused on the CCD sensor, read data corresponding to the document is acquired. The read data includes, for example, data about three different color components, red (R), green (G), and blue (B). The reader unit 400 converts the read data into image data about yellow, magenta, cyan, and black, and transmits the data to a tone correction unit 316 (Fig. 2) of the image forming apparatus 100.

(Sensors)

The structure and measurement operation of each sensor 200 will be described below.

Fig. 2 schematically illustrates an essential part of the sensor 200. The sensor 200 includes a white light emitting diode (LED) 201, a diffraction grating 202, a line sensor 203, a calculation unit 204, and a memory 205. The white LED 201 irradiates a measuring image 220 on the sheet 110 with light. The diffraction grating 202 spectrally disperses reflected light from the measuring image 220 for each wavelength. The line sensor 203 includes n light receiving elements (n pixels). The calculation unit 204 performs various calculations based on the light intensity value of each pixel of the line sensor 203. The memory 205 stores various data.

The sensor 200 detects the light intensity of reflected light for wavelengths ranging from 380 to 720 nm at intervals of 10 nm. The calculation unit 204 includes, for example, a spectrum calculation unit 204a for calculating the spectrum reflectance based on the light intensity value of each pixel of the line sensor 203, and a Lab calculation unit 204b for calculating the L*a*b* value. The sensor 200 may include a lens 206 for condensing light emitted from the white LED 201 onto the measuring image 220 on the sheet 110 and condensing reflected light from the measuring image 220 onto the diffraction grating 202.

The sensor 200 further includes a white reference plate 250. The sensor 200 adjusts the light volume of the LED 201 with the white reference plate 250. For example, the sensor 200 emits light from the LED 201 in a state where the sheet 110 has not passed through the measurement position of the sensor 200, and receives reflected light from the white reference plate 250 with the line sensor 203. Then, the calculation unit 204 corrects the luminescence intensity of the LED 201 so that the light intensity value of a predetermined pixel of the line sensor 203 becomes a predetermined value.

The spectrum calculation unit 204a calculates a spectrum reflectance $R(\lambda)$ of the measuring image using the formula 1 based on a detection result $P(\lambda)$ of the line sensor 203 corresponding to reflected light from the measuring image and a detection result $W(\lambda)$ of the line sensor 203 corresponding to reflected light from the white reference plate 250.

$$R(\lambda) = P(\lambda)/W(\lambda) \quad \ldots \quad (Formula\ 1)$$

Before measuring the measuring image, the sensor 200 emits light from the LED 201 in a state where the sheet 110 has not passed through the measurement position of the sensor 200, and acquires the detection result $W(\lambda)$ of the white reference plate 250 with the line sensor 203.

(Control Block Diagram of Image Forming Apparatus)

A control block diagram of the image forming apparatus 100 will be described below with reference to Fig. 3. The CPU 300 is a control circuit for controlling each component of the image forming apparatus 100. A read only memory (ROM) 304 stores a control program required to perform various processing of flowcharts (described below) to be executed by the CPU 300. A random access memory (RAM) 309 is a system work memory required for operations of the CPU 300.

The printing unit 101 includes the stations 120, 121, 122, and 123, the primary transfer roller 118, the intermediate transfer belt 106, the secondary transfer roller 114, and the fixing units 150 and 160. The operation unit 180 and the reader unit 400 have already been described above and descriptions thereof will be omitted. An interface (I/F) unit 302 is an interface for inputting image data transmitted from a personal computer (PC) as an external apparatus.

A raster image processor (RIP) 315 analyzes the image data input via the I/F unit 302 and rasterizes the image data into bit map data. The RIP 315 classifies each of a plurality of objects included in the image data into image data related to images (photographs), image data related to graphics (drawings), and image data related to texts (characters).

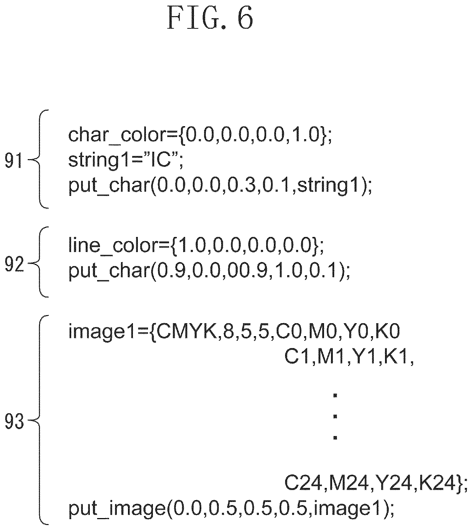

Fig. 6 illustrates an example of image data generated using a page description language and input to the I/F unit 302 from a PC as an external apparatus. Image data described in the page description language is roughly classified into (a) text data, (b) graphics data, and (c) raster image data. A command 91 corresponds to text data which is converted into a character string with rasterization into bit map data. The command 91 includes information for defining a character string, character color and its signal level (density), layout position on a recording material P, character size, and character spacing. A command 92 corresponds to graphics data which is converted into a line drawing with rasterization into bit map data. The command 92 includes information for defining line color and density, coordinates of starting and ending points of line, and line thickness. A command 93 corresponds to raster image data which is converted into a photographic image with rasterization into bit map data. The command 93 includes information for defining color, density, and position.

In the case of different objects of image data, different tone correction and different halftoning are performed (described below). The halftoning is changed according to each object type because characters to be printed on a sheet include not only straight lines but also many curved lines. Thus, the number of lines needs to be increased to reproduce smooth contours of characters. However, if halftoning is performed on a photograph using a high line number screen, an image having a uniform density may not be reproduced. The image forming apparatus 100 performs halftoning suitable for each object and converts the image data based on a tone correction table corresponding to halftoning.

The tone correction unit 316 performs various image processing on the input image data to covert the image data. If the condition of the developing agent in the development unit 112 or the temperature or humidity inside the image forming apparatus 100 changes, the density characteristics (tone characteristics) of an image formed by the image forming apparatus 100 may change. To that end, the tone correction unit 316 converts the input value (image signal value) of image data into a signal value with which the printing unit 101 forms an image having the target density so that the density characteristics (tone characteristics) of an image formed by the printing unit 101 become ideal density characteristics.

The tone correction unit 316 converts the image data based on tone correction tables ($\gamma$Lookup Tables ($\gamma$LUTs)) stored in a memory 310. A tone correction table LUT_SC1 corresponds to an image screen. A tone correction table LUT_SC2 corresponds to a text screen. A tone correction table LUT_SC3 corresponds to a COPY screen. A tone correction table LUT_SC4 corresponds to an error diffusion method. The tone correction tables LUT_SC1, LUT_SC2, LUT_SC3, and LUT_SC4 are stored in the memory 310 and updated by a $\gamma$LUT generation unit 307. The tone correction tables LUT_SC1, LUT_SC2, LUT_SC3, and LUT_SC4 are equivalent to conversion conditions for image data conversion.

The tone correction unit 316 may be implemented by an integrated circuit such as an application specific integrated circuit (ASIC) or implemented by the CPU 300 converting the image data based on a prestored program. The configuration of the tone correction unit 316 is not limited to image data conversion based on the tone correction tables. For example, the tone correction unit 316 may be configured to convert the image signal value based on conversion formulas.

A halftoning unit 317 performs halftoning suitable for the image type (attributes) on image data converted by the tone correction unit 316. The halftoning unit 317 converts the image data related to images and image data related to graphics based on the image screen so that photographs and drawings are reproduced as images excellent in tonality.

The halftoning unit 317 converts the image data related to texts based on the text screen so that characters are vividly printed. In a case where the user selects the error diffusion method, the halftoning unit 317 converts the image data based on the error diffusion method. For example, if moire occurs in a high-resolution image, the user selects halftoning based on the error diffusion method to restrict moire. The halftoning unit 317 converts the image data about a document read by the reader unit 400, based on the COPY screen.

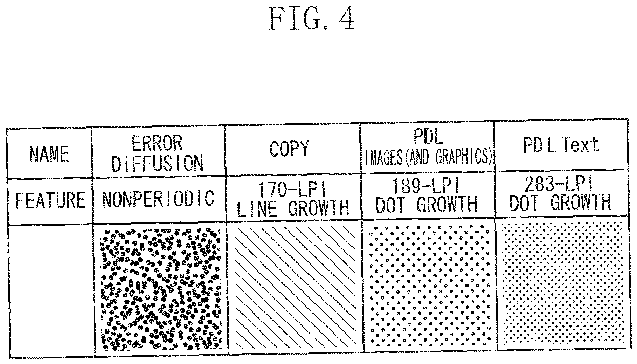

Fig. 4 is an enlarged view illustrating an image (halftone) processed based on the error diffusion method, the COPY screen, the image screen, and the text screen. The number of lines of the COPY screen is 170. The number of lines of the image screen is 189. The number of lines of the text screen is 283. The error diffusion method is a nonperiodic screen. More specifically, the error diffusion method is a Frequency Modulation (FM) screen, and the COPY, the image, and the text screens are Amplitude Modulation (AM) screens. The above-described screens are examples, and the image forming apparatus and the control method according to the present invention are not limited to these screens. Image data after screening by the halftoning unit 317 has been performed is input to the printing unit 101. The printing unit 101 forms an image based on the input image data on the sheet 110.

A pattern generator 305 outputs measuring image data in a case where the automatic tone correction is performed. In the automatic tone correction, the density of an image formed by the image forming apparatus 100 is corrected to a desired density. The halftoning unit 317 performs halftoning on the measuring image data output from the pattern generator 305. The halftoned measuring image data is transmitted to the printing unit 101. The printing unit 101 forms measuring images on the sheet 110 based on the measuring image data transmitted from the halftoning unit 317. The CPU 300 conveys the sheet 110 with the measuring images formed thereon to the sensor 200, and instructs the sensor 200 to measure the measuring images on the sheet 110. The sensor 200 calculates the spectrum reflectance of the measuring image 220 via the calculation unit 204, and outputs the spectrum reflectance to a density conversion unit 306.

The density conversion unit 306 converts the measurement result of the sensor 200 into a density value based on a status A filter or a visual filter. A printer controller 301 controls the image forming conditions based on the measurement result (density value) converted by the density conversion unit 306 and generates tone correction tables. The printer controller 301 includes, for example, a laser power (LPW) adjustment unit 308 for adjusting the intensity of laser of the exposure apparatus 103, and a γLUT generation unit 307 for generating tone correction tables.

The LPW adjustment unit 308 determines the intensity of laser so that the maximum value of the density of the measuring image becomes a target maximum density. The γLUT generation unit 307 generates tone correction tables (γLUT) so that the tone characteristics of the measuring image become ideal tone characteristics. A measuring image is formed for each color and for each screen.

Automatic tone correction will be described below with reference to a control block diagram of the image forming apparatus 100 illustrated in Fig. 2.

The CPU 300 outputs test charts for the maximum density adjustment by controlling the pattern generator 305 and the printing unit 101. At this timing, a measuring image D for the maximum density adjustment is formed on the sheet 110 based on a charging potential or a charging potential set at the time of the previous maximum density adjustment, the laser intensity (exposure intensity) of the exposure apparatus 103, and the developing bias. Subsequently, the CPU 300 instructs the sensor 200 to measure the measuring image D. The density conversion unit 306 converts the measurement result of the measuring image D into density data, and sends the converted density data to the printer controller 301.

The printer controller 301 adjusts the charging potential, the exposure intensity, and the developing bias so that the maximum density of an image to be output becomes the target maximum density. The printing unit 101 uses the adjusted charging potential, the exposure intensity, and the developing bias for subsequent image forming operations. The maximum density of the output image is adjusted by the above-described operations. The method for adjusting the charging potential, the exposure intensity, and the developing bias based on the density data about the measuring image is a known technique, and detailed descriptions thereof will be omitted.

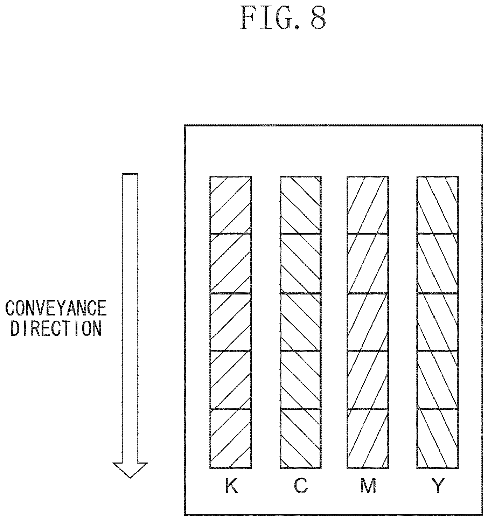

Fig. 8 is a schematic view illustrating a test chart with each measuring image D formed thereon. This test chart is used for the maximum density adjustment. The measuring image D is formed by controlling the exposure intensity to become different values. In a case where the printing unit 101 forms the measuring image D, the exposure intensity is controlled to, for example, 50H, 70H, 90H, B0H, and D0H. The position of the measuring image D with respect to the sheet 110 is predetermined so that the measuring image D on the sheet 110 passes through the measurement position of the sensor 200.

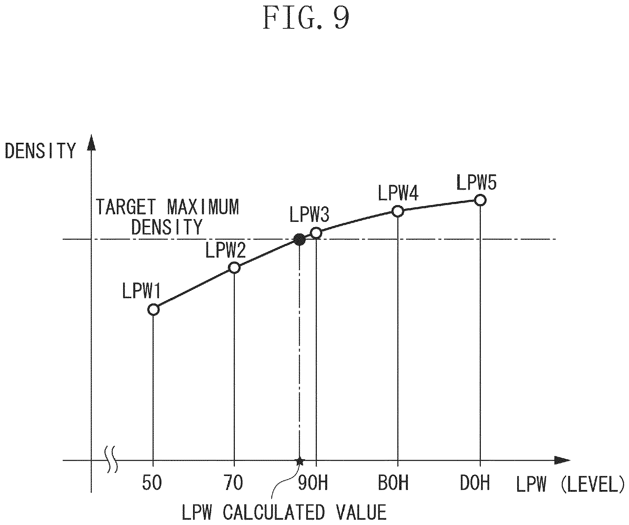

Fig. 9 illustrates data which indicates the correspondence relation between the exposure intensity and the density related to the measuring image D for black. The LPW adjustment unit 308 acquires the correspondence relation between the exposure intensity and the density illustrated in Fig. 9 based on the density data about the measuring image D output from the density conversion unit 306, and determines the exposure intensity that achieves the target maximum density.

After the maximum density adjustment is performed, the CPU 300 controls the printing unit 101 to form a 10-tone measuring image F (measuring image A) on the sheet 110. The image signal values of the 10-tone measuring image only need to include, for example, 00H, 20H, 40H, 55H, 70H, 85H, A0H, C0H, E0H, and FFH.

In this case, the 10-tone measuring image F is formed on the sheet 110 by using the charging potential, the exposure intensity, and the developing bias adjusted in the maximum density adjustment. With the 10-tone measuring image F being formed on the sheet 110, the CPU 300 causes the sensor 200 to measure the 10-tone measuring image F. The density conversion unit 306 converts the measurement result of the measuring image F into density data, and sends the converted density data to the printer controller 301. The γLUT generation unit 307 of the printer controller 301 generates tone correction tables so that the tone characteristics become ideal tone characteristics, and stores the tables in the memory 310.

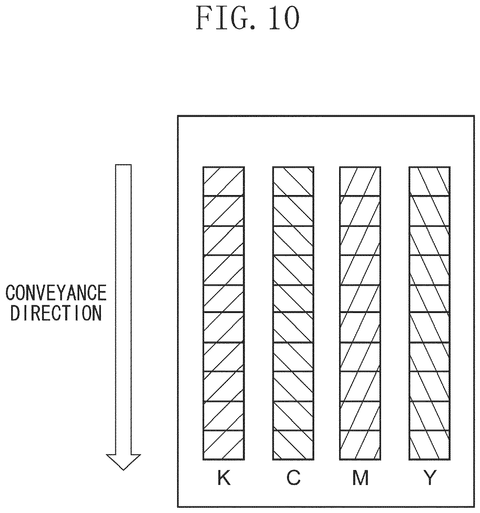

Fig. 10 is a schematic view illustrating a test chart to be printed to generate a tone correction table. For one test chart, the measuring image F (measuring image A) having 10 different tones is formed for each color. The measuring image F (measuring image A) has undergone halftoning with the halftoning unit 317. The position of the measuring image F (measuring image A) with respect to the sheet 110 is predetermined so that the measuring image F (measuring image A) on the sheet 110 passes through the measurement position of the sensor 200.

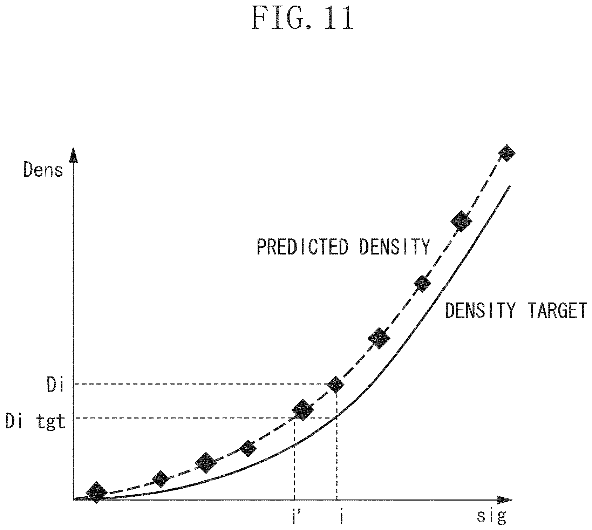

Fig. 11 illustrates a concept on which the γLUT generation unit 307 generates tone correction tables. The horizontal axis is assigned to the image signal value and the vertical axis is assigned to the density. The solid line indicates ideal tone characteristics. The dashed line indicates the tone characteristics of the printing unit 101 acquired based on the density of the measuring image measured by the sensor 200. Since only ten tones are formed in the measuring image, the γLUT generation unit 307 obtains a measurement result between a measuring image and another measuring image through linear interpolation.

To convert a density $D_i$ of an image signal value i into a target density $D_{itgt}$, the image signal value i may only be converted into an image signal value $i_{tgt}$ corresponding to the target density $D_{itgt}$ of the image signal value i. The γLUT generation unit 307 generates a table for converting the image signal value i into the image signal value $i_{tgt}$ as a tone correction table.

(Image Forming Processing)

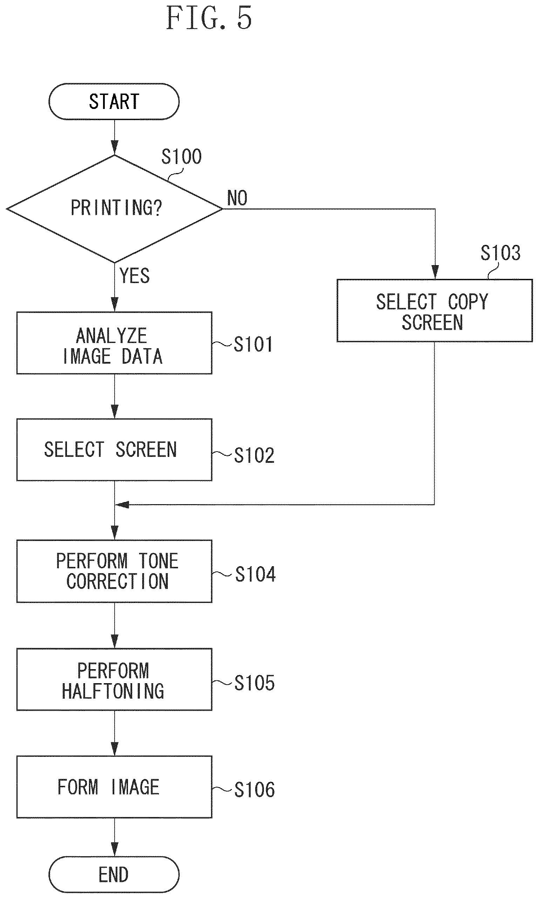

Processing, performed by the image forming apparatus 100, for forming an image based on image data will be described below with reference to the flowchart illustrated in Fig. 5. With image data being input from the reader unit 400 or the I/F unit 302, the CPU 300 reads a program stored in the ROM 304 and performs processing of the flowchart illustrated in Fig. 5.

In step S100, the CPU 300 determines whether the image data has been input from the reader unit 400 or input from the I/F unit 302. If image data has been input from the I/F unit 302 (YES in step S100), the processing proceeds to S101. In step S101, the RIP 315 analyzes the image data generated by using a page description language. In step S102, the CPU 300 selects a halftoning type for each object (attribute) of the image data analyzed by the RIP 315. The RIP 315 rasterizes the analyzed image data and outputs the rasterized data to the tone correction unit 316.

If image data has been input from the reader unit 400 (NO in step S100), the processing proceeds to step S103. In step S103, the CPU 300 selects the COPY screen as the halftoning type corresponding to a non-text area of the image data. The CPU 300 selects the text screen as the halftoning type corresponding to a text area of the image data. Then, the CPU 300 outputs the image data to the tone correction unit 316.

In step S104, the tone correction unit 316 converts the image signal included in the image data based on the tone correction table corresponding to the halftoning type performed by the image data. The tone correction unit 316 outputs the image data converted based on the tone correction table to the halftoning unit 317. In step S104, the tone correction unit 316 converts the image data related to images containing photographs and drawings based on the tone correction table LUT_SC1 corresponding to the image screen. The tone correction unit 316 further converts the image data related to texts based on the tone correction table LUT_SC2 corresponding to the text screen. The tone correction unit 316 converts the image data input from the reader unit 400, based on the tone correction table LUT_SC3 corresponding to the COPY screen.

In step S105, the halftoning unit 317 performs, on the image data, halftoning corresponding to the attributes of image data. Then, the halftoning unit 317 transmits the halftoned image data to the printing unit 101. In step S105, the halftoning unit 317 performs halftoning using the image screen on the image data related to photographs and drawings. The halftoning unit 317 performs halftoning using the text screen on image data related to texts. The halftoning unit 317 performs halftoning using the COPY screen on image data input from the reader unit 400.

In step S106, the CPU 300 controls the printing unit 101 to form an image on a sheet based on the halftoned image data.

(Automatic Tone Correction)

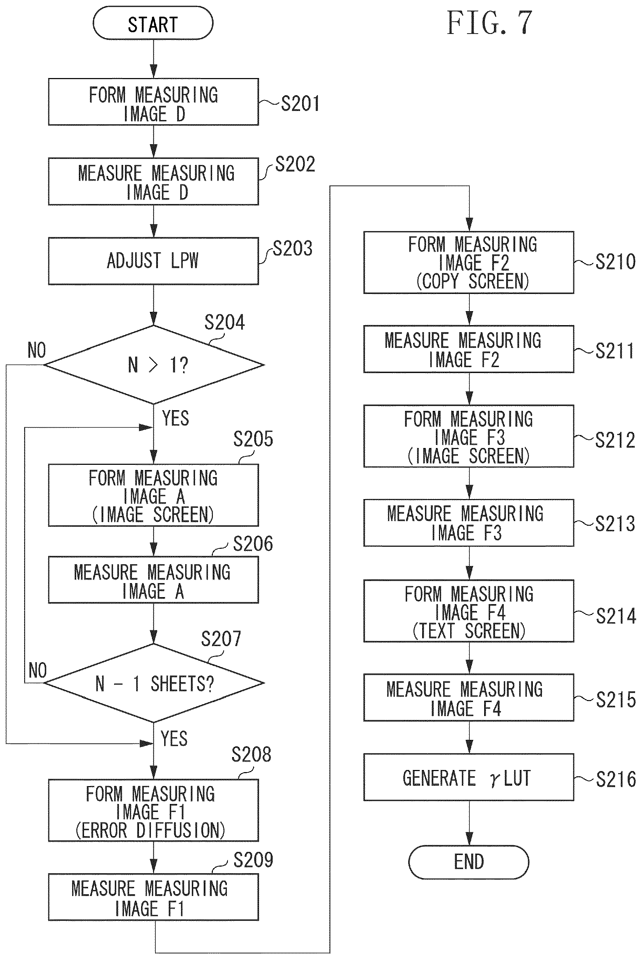

Fig. 7 is a flowchart illustrating the automatic tone correction executed by the CPU 300 of the image forming apparatus 100. If the user inputs a signal for specifying execution of the automatic tone correction from the operation unit 180, the CPU 300 executes the automatic tone correction. In the following descriptions, with the automatic tone correction being performed, the image forming apparatus 100 adjusts the laser intensity (exposure intensity) of the exposure apparatus 103 as the image forming conditions and generates tone correction tables as conversion conditions.

In step S201, the CPU 300 instructs the printing unit 101 to feed the sheet 110 from the storage unit 113 and to form the measuring image D on the sheet 110. In step S202, the CPU 300 instructs the sensor 200 to measure the measuring image D while the sheet 110 is passing through the measurement position of the sensor 200. In step S202, the density conversion unit 306 converts the measurement result of the measuring image D into density data. In step S203, the CPU 300 adjusts the exposure intensity based on the density data output from the density conversion unit 306.

In step S204, after the exposure intensity has been adjusted in the maximum density adjustment, the CPU 300 acquires information about the number of sheets on which the measuring images corresponding to the image screen are to be formed, and determines whether the number of sheets N is larger than one. The halftoning type regarded as important by the user may be the halftoning to be performed on image data related to images such as photographs transmitted from a PC. Then, in the automatic tone correction, the image forming apparatus 100 prints a test chart corresponding to the image screen for the number of sheets according to the number of sheets selected by the user. The image forming apparatus 100 prints test charts corresponding to screens other than the image screen for the number of copies according to the smaller number of sheets selected by the user. As a result, the image forming apparatus 100 reduces the consumption of sheets and the down time of the automatic tone correction, as compared with an image forming apparatus which forms test charts in all halftoning types. A method for acquiring the information about the number of sheets will be described below. If the number of sheets N is larger than one (YES in step S204), the processing proceeds to step S205. In step S205, the CPU 300 instructs the printing unit 101 to feed a new sheet 110 from the storage unit 113 and to form on the sheet 110 a measuring image A corresponding to the image screen. In step S205, the CPU 300 causes the pattern generator 305 to output measuring image data to the halftoning unit 317. The halftoning unit 317 performs halftoning on the measuring image data by using the image screen and outputs the halftoned measuring image data to the printing unit 101. The CPU 300 causes the printing unit 101 to form the measuring image A based on the measuring image data. In step S206, the CPU 300 causes the sensor 200 to measure the measuring image A while the sheet 110 is passing through the measurement position of the sensor 200. The density conversion unit 306 converts the measurement result of the measuring image A into density data. The density data about the measuring image A is temporally stored in the RAM 309.

In step S207, the CPU 300 determines whether the number of sheets of the test chart with the measuring images corresponding to the image screen formed thereon has reached N - 1. If the number of sheets of the test chart is smaller than N - 1 (NO in step S207), the processing returns to step S205. In step S205, the CPU 300 instructs the printing unit 101 to form again the test chart with the measuring image A formed thereon. The CPU 300 repetitively executes steps S205 to S207 until N - 1 sheets of the test chart are formed.

On the other hand, if the number of sheets of the test chart reaches N - 1 (YES in step S207), the processing proceeds to step S208. In step S208, the CPU 300 causes the printing unit 101 to feed a new sheet 110 from the storage unit 113 and to form a measuring image F1 corresponding to the error diffusion method, on the sheet 110. In step S208, the CPU 300 causes the pattern generator 305 to output measuring image data to the halftoning unit 317. The halftoning unit 317 performs halftoning on the measuring image data using the error diffusion method and outputs the halftoned measuring image data to the printing unit 101. The CPU 300 causes the printing unit 101 to form the measuring image F1 based on the measuring image data. In step S209, the CPU 300 causes the sensor 200 to measure the measuring image F1 while the sheet 110 is passing through the measurement position of the sensor 200. The density conversion unit 306 converts the measurement result of the measuring image F1 into density data. The density data about the measuring image F1 is temporally stored in the RAM 309.

If the number of sheets N is one (NO in step S204), the processing proceeds to step S208. More specifically, if the number of sheets on which the measuring images corresponding to the image screen are to be formed is 2 or less, the CPU 300 does not cause the printing unit 101 to form the measuring image A corresponding to the image screen, and causes the printing unit 101 to form the measuring image F1 corresponding to the error diffusion method.

In step S210, after the measuring image F1 has been formed on the sheet 110, the CPU 300 causes the printing unit 101 to feed a new sheet 110 from the storage unit 113 and to form a measuring image F2 corresponding to the COPY screen on the sheet 110. In step S210, the CPU 300 causes the pattern generator 305 to output measuring image data to the halftoning unit 317. The halftoning unit 317 performs halftoning on the measuring image data by using the COPY screen and outputs the halftoned measuring image data to the printing unit 101. The CPU 300 causes the printing unit 101 to form the measuring image F2 based on the measuring image data. In step S211, the CPU 300 causes the sensor 200 to measure the measuring image F2 while the sheet 110 is passing through the measurement position of the sensor 200. The density conversion unit 306 converts the measurement result of the measuring image F2 into density data. The density data about the measuring image F2 is temporarily stored in the RAM 309.

In step S212, after the measuring image F2 has been formed on the sheet 110, the CPU 300 causes the printing unit 101 to feed a new sheet 110 from the storage unit 113 and to form a measuring image F3 corresponding to the image screen on the sheet 110. In step S212, the CPU 300 causes the pattern generator 305 to output measuring image data to the halftoning unit 317. The halftoning unit 317 performs halftoning on the measuring image datausing the image screen, and outputs the halftoned measuring image data to the printing unit 101. The CPU 300 causes the printing unit 101 to form the measuring image F3 based on the measuring image data. In step S213, the CPU 300 causes the sensor 200 to measure the measuring image F3 while the sheet 110 is passing through the measurement position of the sensor 200. The density conversion unit 306 converts the measurement result of the measuring image F3 into density data. The density data about the measuring image F3 is temporarily stored in the RAM 309.

In step S214, after the measuring image F3 has been formed on the sheet 110, the CPU 300 causes the printing unit 101 to feed a new sheet 110 from the storage unit 113 and to form a measuring image F4 corresponding to the text screen on the sheet 110. In step S214, the CPU 300 causes the pattern generator 305 to output measuring image data to the halftoning unit 317. The halftoning unit 317 performs halftoning on the measuring image data using the text screen and outputs the halftoned measuring image data to the printing unit 101. The CPU 300 causes the printing unit 101 to form the measuring image F4 based on the measuring image data. In step S215, the CPU 300 causes the sensor 200 to measure the measuring image F4 while the sheet 110 is passing through the measurement position of the sensor 200. The density conversion unit 306 converts the measurement result of the measuring image F4 into density data. The density data about the measuring image F4 is temporarily stored in the RAM 309.

In step S216, after the measuring images corresponding to all screens have been measured by the sensor 200, the $\gamma$LUT generation unit 307 generates tone correction tables based on the density data about the measuring images stored in the RAM 309. In step S216, the $\gamma$LUT generation unit 307 generates the tone correction table LUT_SC4 corresponding to the error diffusion method based on the density data about the measuring image F1, and stores the table in the memory 310. Similarly, in step S216, the $\gamma$LUT generation unit 307 generates the tone correction table LUT_SC3 corresponding to the COPY screen based on the density data about the measuring image F2, and stores the table in the memory 310. In step S216, the $\gamma$LUT generation unit 307 generates the tone correction table LUT_SC2 corresponding to the text screen based on the density data about the measuring image F4, and stores the table in the memory 310. In step S216, the $\gamma$LUT generation unit 307 generates the tone correction table LUT_SC1 corresponding to the image screen based on the density data about the measuring images A and F3, and stores the table in the memory 310. In a case where the number of sheets on which the measuring images corresponding to the image screen are to be formed is two or less, the $\gamma$LUT generation unit 307 generates the tone correction table LUT_SC1 based on the density data about the measuring image F3.

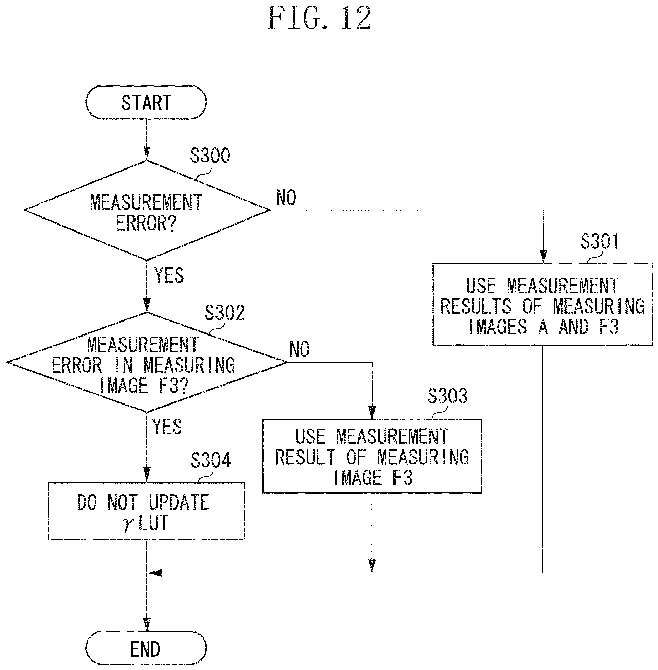

Fig. 12 is a flowchart illustrating processing for generating a tone correction table corresponding to the image screen. A method for generating a tone correction table, performed by the $\gamma$LUT generation unit 307, corresponding to the image screen will be described below with reference to Fig. 12.

In a case where the measuring image A is to be formed on a plurality of sheets, the $\gamma$LUT generation unit 307 calculates the average value of the density data about the measuring image A and the density data about the measuring image F3, and generates the tone correction table LUT_SC1 corresponding to the image screen based on the average value. In such a manner, a tone correction table is generated with higher accuracy than that in a case of using the density data about the measuring image F3 on a test chart formed on only one sheet.

Since test charts are conveyed along the conveyance path, paper powder, toner, or a substance contained in toner (hereinafter, referred to as dust) adhering to the conveyance path adhere to the test charts. Accordingly, the color sensor 200 may incorrectly detect the measuring result of the measuring image A or F3. In such a case, the density of an image to be formed by the printing unit 101 based on the tone correction table generated using the average value of the density data about the measuring images A and F3 does not become a desired density. Accordingly, the CPU 300 determines whether dust adheres to the measuring image A and/or F3. In a case where dust adheres to the measuring image A and/or F3, the $\gamma$LUT generation unit 307 changes the method for generating a tone correction table.

In step S300, the $\gamma$LUT generation unit 307 determines whether abnormal density data is included in the measurement result of the measuring images A and F3. In step S300, the $\gamma$LUT generation unit 307 compares the density data about the measuring image A with the density data about the measuring image F3 to determine whether any measuring image A has a density difference larger than a predetermined value. In the present exemplary embodiment, the predetermined value is, for example, 0.2. In a case where the density difference between the density data about the measuring image A and the density data about the measuring image F3 is larger than the predetermined value, it is likely that paper powder, toner, or a substance contained in toner adheres to the measuring image A or F3. In a case where the measuring image A corresponding to the image screen is formed after execution of the maximum density adjustment, it is likely that paper powder, toner, or a substance contained in toner adheres to the measuring image A.

The test chart used for the maximum density adjustment may possibly has dust adheres thereon. Since the size of the measuring image D is larger than the sizes of the measuring images F1, F2, F3, F4, and A, the sensor 200 can measure a plurality of different positions included in one measuring image D. The influence of dust can be almost ignored by averaging the density data excluding the maximum and minimum values from the plurality of density data acquired from one measuring image D.

If the density difference between the measuring images A and F3 is smaller than the predetermined value (NO in step S300), the processing proceeds to step S301. In step S301, the γLUT generation unit 307 generates a tone correction table based on the average value of the density data about the measuring image A and the density data about the measuring image F3.

If the density difference between the measuring images A and F3 is equal to or larger than the predetermined value (YES in step S300), the processing proceeds to step S302. In step S302, the γLUT generation unit 307 determines whether abnormal density data is included in the measurement result of the measuring image F3. In step S301, the γLUT generation unit 307 determines whether the density of the measuring image formed based on a first image signal value is higher than the density of the measuring image formed based on a second image signal value larger than the first image signal value. If all of the measuring images formed on the sheet 110 satisfy the above-described conditions, the γLUT generation unit 307 determines that the measuring image F3 formed on the sheet 110 does not have dust adheres thereon (NO in step S302), and the processing proceeds to step S303. In step S303, the γLUT generation unit 307 generates the tone correction table LUT_SC1 based on the density data about the measuring image F3 without using the density data A of the measuring image A.

If the measuring image F3 formed on one test chart satisfies none of the above-described conditions, it is likely that the measuring image F3 has dust adheres thereon (YES in step S302), and the processing proceeds to step S304. In step S304, the γLUT generation unit 307 does not update the tone correction tables. Alternatively, in step S304, the CPU 300 inhibits the storage of the tone correction table LUT_SC1 generated by the γLUT generation unit 307.

In this way, in a case where neither the measuring image A nor F3 has dust adheres thereon, the γLUT generation unit 307 generates the tone correction table LUT_SC1 based on both the density data about the measuring image A and the density data about the measuring image F3. In a case where the measuring image F3 has dust adheres thereon, the γLUT generation unit 307 inhibits the generation of the tone correction table LUT_SC1 based on the density data about the measuring image F3. In a case where the measuring image A has dust adheres thereon and the measuring image F3 does not have dust thereon, the γLUT generation unit 307 generates the tone correction table LUT_SC1 based on the density data about the measuring image F3 without using the density data about the measuring image A. This configuration enables the γLUT generation unit 307 to generate the tone correction table LUT_SC1 without using the measurement result of the measuring image on the sheet 110 having dust adheres thereon due to toner or paper powder of the conveyance path.

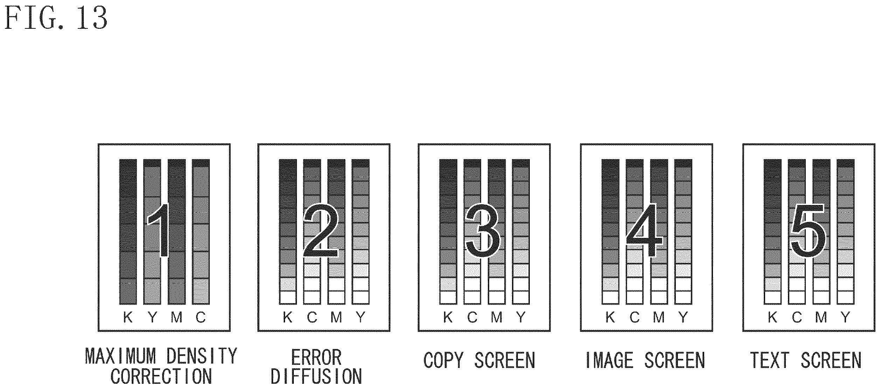

Fig. 13 is a schematic view illustrating test charts formed by the printing unit 101 in a case where the automatic tone correction is performed. Referring to Fig. 13, the number of sheets N on which the measuring images corresponding to the image screen are to be formed is one. In such a case, the measuring images D to be used for the maximum density adjustment are formed on the first test chart. Subsequently, the measuring images F1 corresponding to the error diffusion method are formed on the second test chart. The measuring images F2 corresponding to the COPY screen are formed on the third test chart. The measuring images F3 corresponding to the image screen are formed on the fourth test chart. The measuring images F4 corresponding to the text screen are formed on the fifth test chart. In a case where the number of sheets N on which the measuring images corresponding to the image screen are to be formed is one, one test chart is formed for each halftoning type, making it possible to restrain the down time when the automatic tone correction is performed.

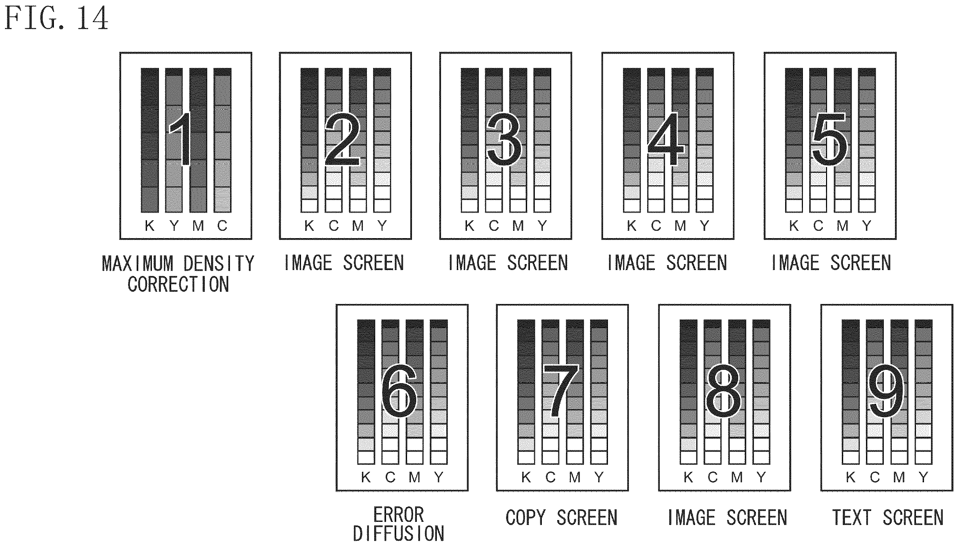

Fig. 14 is a schematic view illustrating test charts formed by the printing unit 101 in a case where the automatic tone correction is performed. Referring to Fig. 14, the number of sheets N on which the measuring images corresponding to the image screen are to be formed is five. In this case, the measuring images D to be used for the maximum density adjustment are formed on the first test chart. Subsequently, the measuring images A corresponding to the image screen are formed on the second to the fifth test charts. The measuring images F1 corresponding to the error diffusion method are formed on the sixth test chart. The measuring images F2 corresponding to the COPY screen are formed on the seventh test chart. The measuring images F3 corresponding to the image screen are formed on the eighth test chart. The measuring images F4 corresponding to the text screen are formed on the ninth test chart.

In a case where the number of sheets with the measuring images corresponding to the image screen formed thereon is two or more, there are formed one test chart corresponding to the error diffusion method, one test chart corresponding to the COPY screen, one test chart corresponding to the text screen, and N test charts corresponding to the image screen. As a result, in a case where test charts are formed as illustrated in Fig. 14, it is possible to generate a tone correction table corresponding to the image screen with higher accuracy than that in a case where one test chart is formed for each halftoning type. In addition, since the measuring images corresponding to the image screen are formed before test charts corresponding to other halftoning types are formed, dust accumulated on the conveyance path can be collected by using test charts.

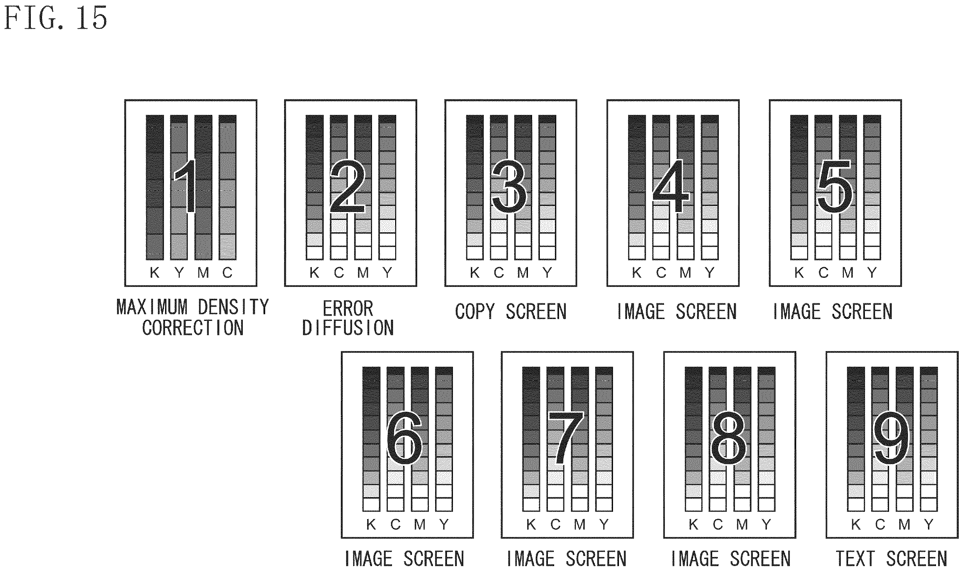

A modification in which test charts are formed in a different order from that illustrated in Fig. 14 will be described below with reference to Fig. 15. Fig. 15 is a schematic view illustrating test charts formed by the printing unit 101 in a case where the automatic tone correction is performed. Referring to Fig. 15, the number of sheets N on which the measuring images corresponding to the image screen are to be formed is five. In this case, the measuring images D to be used for the maximum density adjustment are formed on the first test chart. Subsequently, the measuring images F1 corresponding to the error diffusion method are formed on the second test chart. The measuring images F2 corresponding to the COPY screen are formed on the third test chart. The measuring images F3 corresponding to the image screen are formed on the fourth to the eighth test charts. The measuring images F4 corresponding to the text screen are formed on the ninth test chart.

In the modification illustrated in Fig. 15, the tone correction table corresponding to the image screen can be generated with higher accuracy than that in a case where one test chart is formed for each halftoning type. However, the sheet with the measuring images corresponding to the error diffusion method formed thereon and the sheet with the measuring images corresponding to the COPY screen formed thereon may possibly have dust adheres thereon. More specifically, in a case where test charts are formed in the order illustrated in Fig. 15, it may not be possible to generate the tone correction tables corresponding to the error diffusion method and the COPY screen with high accuracy.

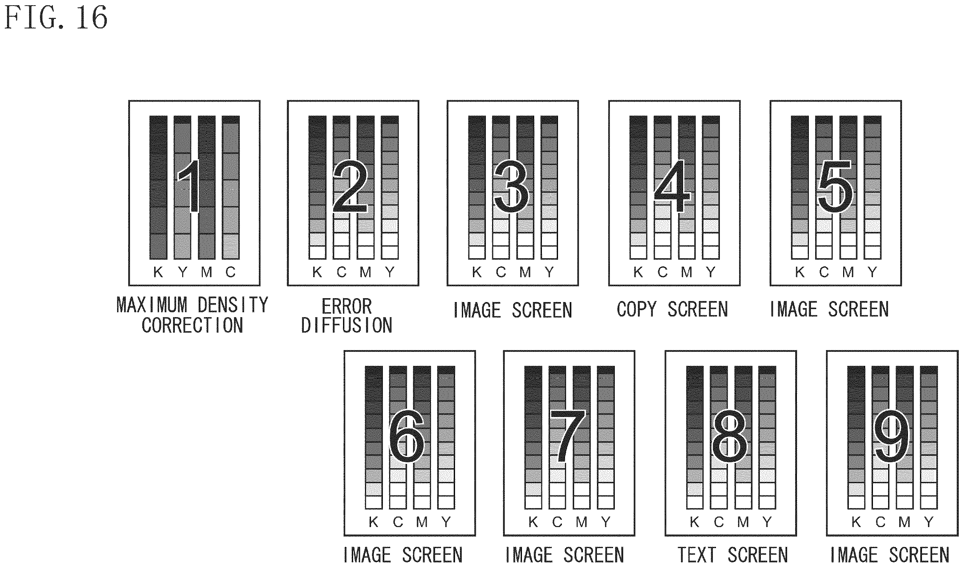

A modification in which test charts are formed in a different order from those illustrated in Figs. 14 and 15 will be described below with reference to Fig. 16. Fig. 16 is a schematic view illustrating test charts formed by the printing unit 101 in a case where the automatic tone correction is performed. Referring to Fig. 16, the number of sheets N on which the measuring images corresponding to the image screen are to be formed is five. In this case, the measuring images D to be used for the maximum density adjustment are formed on the first test chart. Subsequently, the measuring images F1 corresponding to the error diffusion method are formed on the second test chart. The measuring images F3 corresponding to the image screen are formed on the third test chart. The measuring images F2 corresponding to the COPY screen are formed on the fourth test chart. The measuring images F3 corresponding to the image screen are formed on the fifth to the seventh test charts. The measuring images F4 corresponding to the text screen are formed on the eighth test chart. The measuring images F3 corresponding to the image screen are formed on the ninth test chart.

In the modification illustrated in Fig. 16, the tone correction table corresponding to the image screen can be generated with higher accuracy than that in a case where one test chart is formed for each halftoning type. However, the sheet with the measuring images corresponding to the error diffusion method formed thereon may possibly have dust adheres thereon. More specifically, in a case where test charts are formed in the order illustrated in Fig. 16, it may not be possible to generate the tone correction table corresponding to the error diffusion method with high accuracy.

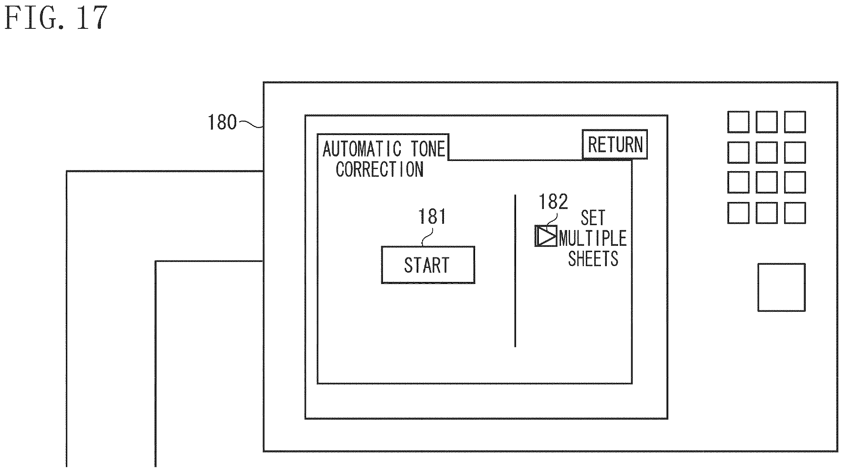

A method for acquiring information about the number of sheets will be described below. Fig. 17 illustrates a state where a screen for instructing the image forming apparatus 100 to perform the automatic tone correction is displayed on a touch panel of the operation unit 180. To instruct the image forming apparatus 100 to start the automatic tone correction, the user presses a Start button 181. If the user wants to set the number of sheets on which the measuring images corresponding to the image screen are to be formed, the user presses a Set Multiple Sheets button 182 and inputs a number from one to ten with the numeric keypad of the operation unit 180 before pressing the Start button 181.

The number one to five input by the user after pressing the Set Multiple Sheets button 182 corresponds to the number of sheets on which the measuring images corresponding to the image screen are to be formed. The image forming apparatus 100 assumes a lower limit number of sheets on which the measuring images corresponding to the image screen are to be formed is one, and an upper limit number of sheets on which the measuring images corresponding to the image screen are to be formed is five. In a case where the user presses the Start button 181 without pressing the Set Multiple Sheets button 182, the number of sheets on which the measuring images corresponding to the image screen are to be formed is only one. In a case where the user specifies the number of sheets, the image forming apparatus 100 does not change the specified number of sheets on which the measuring images corresponding to the image screen are to be formed unless the user presses the Set Multiple Sheets button 182 again.

The CPU 300 acquires information about the number of sheets specified by the user via the operation unit 180, and, according to the acquired number of sheets, sets the number of sheets on which the measuring images corresponding to the image screen are to be formed.

The method used by the user to specify the number of sheets on which the measuring images corresponding to the image screen are to be formed is not limited to the above-described method. For example, the user may press a "+" and a "-" buttons displayed on the touch panel to change the number of sheets. More specifically, each time the user presses the "+" button, the number of sheets on which the measuring images corresponding to the image screen are to be formed is incremented by one. Each time the user presses the "-" button, the number of sheets on which the measuring images corresponding to the image screen are to be formed is decremented by one. In a case where the user presses the "+" button five times or more in succession, the number of sheets on which the measuring images corresponding to the image screen are to be formed does not exceed 5. Similarly, in a case where the user presses the "-" button five times or more in succession, the number of sheets on which the measuring images corresponding to the image screen are to be formed will be one.

Although the image forming apparatus 100 is configured so that the sensors 200 disposed in the conveyance path 135 measure the measuring images on the sheet 110, the positions of the sensors 200 are not limited to the conveyance path 135. The sensors 200 may be disposed at any positions as long as the sensors 200 are disposed on the downstream side of the fixing unit in the conveyance direction. For example, the sensors 200 may be disposed in the conveyance path through which the sheet 110 passes to be discharged from the image forming apparatus 100, the conveyance path 130, or the conveyance path 138.

The image forming apparatus 100 is configured so that the measuring images corresponding to the image screen are formed on sheets as many as the number of sheets specified by the user. However, some users may wish to adjust the tone characteristics of images related not only to photographs and drawings but also to texts with high accuracy. Then, the image forming apparatus 100 may be configured to form the measuring images corresponding to the image screen for the number of sheets N specified by the user, and form the measuring images corresponding to the text screen for the number of sheets M (= N - 1). In this configuration, the number of sheets N with the measuring images, corresponding to the image screen, formed thereon is larger than the number of sheets M with the measuring images, corresponding to the text screen, formed thereon. Accordingly, it is possible to reduce the down time, as compared with a case where a plurality of test charts is printed for each halftoning type, and generate the tone correction tables LUT_SC1 and LUT_SC2 based on a plurality of measurement results.

In a case where the image forming apparatus 100 outputs a plurality of test charts in the automatic tone correction, the number of sheets on which the measuring images corresponding to the image screen are to be formed is larger than the number of sheets on which the measuring images corresponding to other screens are to be formed. Accordingly, it is possible to reduce the down time, as compared with a case where a plurality of test charts is printed for each halftoning type and, based on a plurality of measurement results, generate the tone correction table LUT_SC1 corresponding to the image screen with which the user wants to correct tonality with high accuracy. In a case where a plurality of test charts includes a test chart with dust, the $\gamma$LUT generation unit 307 generates the tone correction table LUT_SC1 without using the measurement result of the test chart with dust. Accordingly, even with a test chart with dust, it is possible to prevent the tone characteristics of the printing unit 101 from being changed based on the measurement result including incorrect detection. A test chart corresponding to the image screen passes through the conveyance path before test charts corresponding to other screens are measured. Since dust in the conveyance path is collected by the test chart corresponding to the image screen, the possibility that dust in the conveyance path adheres to test charts corresponding to other screens is restrained.

**Claims**

1. An image forming apparatus comprising:

   a conversion means (316) configured to convert image data based on a conversion condition corresponding to a type of halftoning including first halftoning and second halftoning different from the first halftoning;
   an image processing means (317) configured to perform the halftoning on the image data converted by the conversion means (316);
   an image forming means (101) configured to form an image on a sheet based on the image data halftoned by the image processing means (317);
   a measurement means (200) configured to measure a measuring image formed on the sheet by the image forming means (101);
   an acquisition means (180) configured to receive input of the number of sheets on which the measuring image is to be formed from a user; and
   a controller (300) configured to control the image forming means (101) to form the measuring image on a plurality of sheets, control the measurement means (200) to measure the measuring image on the plurality of sheets, and generate the conversion condition based on a measurement result of the measurement means (200),
   wherein the measuring image includes a first measuring image (image screen) and a second measuring image (text screen),
   wherein, in a case where the controller (300) controls the image forming means (101) based on a predetermined mode to form the measuring image, the controller (300) determines, based on the number of sheets on which the measuring image is to be formed input by the user, the number of sheets on which a first measuring image (image screen) is to be formed,
   wherein, in a case where the controller (300) controls the image forming means (101) based on the predetermined mode to form the measuring image, the number of sheets on which a second measuring image (text screen) is to be formed is a predetermined number,
   wherein the first measuring image (image screen) is used for generating a first conversion condition corresponding to the first halftoning, and
   wherein the second measuring image (text screen) is used for generating a second conversion condition corresponding to the second halftoning.

2. The image forming apparatus according to claim 1,

   wherein the first halftoning is halftoning to be performed on image data related to an image generated using a page description language, and

   wherein the second halftoning is halftoning to be performed on image data related to a text generated using a page description language.

3. The image forming apparatus according to claim 1, wherein, the controller (300) controls the image forming means (101) based on the predetermined mode to form the first measuring images (image screen) on the first sheets and then control the image forming means (101) to form the second measuring images (text screen) on the second sheets.

4. The image forming apparatus according to claim 1,

   wherein the type of halftoning includes a third halftoning different from the first halftoning and the second halftoning, and

   wherein the plurality of sheets further includes a third sheet with a third measuring image, corresponding to the third halftoning, formed on the third measuring image.

5. The image forming apparatus according to claim 4, wherein, in a case where the image forming means (101) is controlled based on the predetermined mode, the controller (300) controls the image forming means to form the first measuring image (image screen) before the image forming means (101) forms the third measuring image.

6. The image forming apparatus according to claim 3, wherein, in a case where the image forming means (101) is controlled based on the predetermined mode, the controller (300) controls the image forming means (101) to form the first measuring image before the image forming means forms the second measuring image.

7. The image forming apparatus according to claim 1, wherein, in a case where the image forming means (101) is controlled based on the predetermined mode, the controller (300) generates the first conversion condition based on a measurement result of the first measuring image formed on the first sheets.

8. The image forming apparatus according to claim 1, wherein the controller (300) further compares measurement results of the first measuring image (image screen) formed on each of the first sheets and, based on comparison results, controls whether the first conversion condition is to be updated.

9. The image forming apparatus according to claim 1, wherein the first halftoning is halftoning using an Amplitude Modulation (AM) screen.

10. The image forming apparatus according to claim 9,

    wherein the second halftoning is halftoning using the AM screen, and

    wherein the number of lines of a screen for the first halftoning is smaller than the number of lines of a screen for the second halftoning.

11. The image forming apparatus according to claim 1, wherein the second halftoning is halftoning to be performed on image data transferred from a reading apparatus in a copy mode.


**Patentansprüche**

1. Bilderzeugungsvorrichtung umfassend:

   eine Umwandlungseinrichtung (316), die konfiguriert ist, Bilddaten basierend auf einer Umwandlungsbedingung, die einem Typ Rasterwerteinstellung einschließlich einer ersten Rasterwerteinstellung und einer von der ersten Rasterwerteinstellung verschiedenen zweiten Rasterwerteinstellung entspricht, umzuwandeln;

   eine Bildverarbeitungseinrichtung (317), die konfiguriert ist, die Rasterwerteinstellung auf den von der Umwandlungseinrichtung (316) umgewandelten Bilddaten durchzuführen;

   eine Bilderzeugungseinrichtung (101), die konfiguriert ist, basierend auf den Bilddaten nach Rasterwerteinstellung durch die Bildverarbeitungseinrichtung (317) ein Bild auf einem Bogen zu erzeugen;

Messeinrichtung (200), die konfiguriert ist, ein von der Bilderzeugungseinrichtung (101) auf dem Bogen erzeugtes Messbild zu messen;

eine Erfassungseinrichtung (180), die konfiguriert ist, eine Eingabe der Anzahl Bögen, auf denen das Messbild erzeugt werden soll, vom Benutzer zu empfangen; und

eine Steuerung (300), die konfiguriert ist, die Bilderzeugungseinrichtung (101) zu steuern, um das Messbild auf mehreren Bögen zu erzeugen, die Messeinrichtung (200) zu steuern, um das Messbild auf den mehreren Bögen zu messen, und die Umwandlungsbedingung basierend auf einem Messergebnis der Messeinrichtung (200) zu erzeugen,

wobei das Messbild ein erstes Messbild (Bildschirm) und ein zweites Messbild (Textbildschirm) beinhaltet,

wobei, in einem Fall, in dem die Steuerung (300) die Bilderzeugungseinrichtung (101) basierend auf einem vorbestimmten Modus steuert, um ein Messbild zu erzeugen, die Steuerung (300) basierend auf der vom Benutzer eingegebenen Anzahl Bögen, auf denen das Messbild erzeugt werden soll, die Anzahl Bögen bestimmt, auf denen ein erstes Messbild (Bildschirm) erzeugt werden soll,

wobei, in einem Fall, in dem die Steuerung (300) die Bilderzeugungseinrichtung (101) basierend auf dem vorbestimmten Modus steuert, um das Messbild zu erzeugen, die Anzahl Bögen, auf denen ein zweiten Messbild (Textbildschirm) erzeugt werden soll, eine vorbestimmte Anzahl ist,

wobei das erste Messbild (Bildschirm) zum Erzeugen einer der ersten Rasterwerteinstellung entsprechenden ersten Umwandlungsbedingung verwendet wird, und

wobei das zweite Messbild (Textbildschirm) zum Erzeugen einer der zweiten Rasterwerteinstellung entsprechenden zweiten Umwandlungsbedingung verwendet wird.

2. Bilderzeugungsvorrichtung nach Anspruch 1,

wobei die erste Rasterwerteinstellung eine Rasterwerteinstellung ist, die an Bilddaten bezüglich eines unter Verwendung einer Seitenbeschreibungssprache erzeugten Bilds durchgeführt werden soll, und

wobei die zweite Rasterwerteinstellung eine Rasterwerteinstellung ist, die an Bilddaten bezüglich eines unter Verwendung einer Seitenbeschreibungssprache erzeugten Textes durchgeführt werden soll.

3. Bilderzeugungsvorrichtung nach Anspruch 1, wobei die Steuerung (300) die Bilderzeugungseinrichtung (101) basierend auf dem vorbestimmten Modus steuert, um die ersten Messbilder (Bildschirm) auf den ersten Bögen zu erzeugen, und die Bilderzeugungseinrichtung (101) dann steuert, um die zweiten Messbilder (Textbildschirm) auf den zweiten Bögen zu erzeugen.

4. Bilderzeugungsvorrichtung nach Anspruch 1,

wobei der Typ Rasterwerteinstellung eine von der ersten Rasterwerteinstellung und von der zweiten Rasterwerteinstellung verschiedene dritte Rasterwerteinstellung beinhaltet, und

wobei die mehreren Bögen weiterhin einen dritten Bogen mit einem entsprechend der dritten Rasterwerteinstellung darauf erzeugten dritten Messbild beinhalten.

5. Bilderzeugungsvorrichtung nach Anspruch 4, wobei, in einem Fall, in dem die Bilderzeugungseinrichtung (101) basierend auf dem vorbestimmten Modus gesteuert wird, die Steuerung die Bilderzeugungseinrichtung steuert, um das erste Messbild (Bildschirm) zu erzeugen, bevor die Bilderzeugungseinrichtung (101) das dritte Messbild erzeugt.

6. Bilderzeugungsvorrichtung nach Anspruch 3, wobei, in einem Fall, in dem die Bilderzeugungseinrichtung (101) basierend auf dem vorbestimmten Modus gesteuert wird, die Steuerung (300) die Bilderzeugungseinrichtung (101) steuert, um das erste Messbild zu erzeugen, bevor die Bilderzeugungseinrichtung das zweite Messbild erzeugt.

7. Bilderzeugungsvorrichtung nach Anspruch 1, wobei, in einem Fall, in dem die Bilderzeugungseinrichtung (101) basierend auf dem vorbestimmten Modus gesteuert wird, die Steuerung (300) die erste Umwandlungsbedingung basierend auf einem Messergebnis des auf den ersten Bögen erzeugten ersten Messbilds erzeugt.

8. Bilderzeugungsvorrichtung nach Anspruch 1, wobei die Steuerung (300) weiterhin Messergebnisse des auf jedem der ersten Bögen erzeugten ersten Messbilds (Bildschirm) vergleicht und basierend auf Vergleichsergebnissen steuert, ob die erste Umwandlungsbedingung aktualisiert werden soll.

9. Bilderzeugungsvorrichtung nach Anspruch 1, wobei die erste Rasterwerteinstellung eine Rasterwerteinstellung unter Verwendung eines Amplitudenmodulationsbildschirms (AM-Bildschirm) ist.

**10.** Bilderzeugungsvorrichtung nach Anspruch 9,

wobei die zweite Rasterwerteinstellung eine Rasterwerteinstellung unter Verwendung des AM-Bildschirms ist, und

wobei die Anzahl Zeilen eines Bildschirms für die erste Rasterwerteinstellung kleiner als die Anzahl Zeilen eines Bildschirms für die zweite Rasterwerteinstellung ist.

**11.** Bilderzeugungsvorrichtung nach Anspruch 1, wobei die zweite Rasterwerteinstellung eine Rasterwerteinstellung ist, die an von einer Lesevorrichtung in einem Kopiermodus übertragenen Bilddaten durchgeführt werden soll.

## Revendications

**1.** Appareil de formation d'image, comprenant :

un moyen de conversion (316) configuré pour convertir des données d'image sur la base d'une condition de conversion correspondant à un type de tramage comprenant un premier tramage et un deuxième tramage différent du premier tramage ;

un moyen de traitement d'image (317) configuré pour appliquer le tramage aux données d'image converties par le moyen de conversion (316) ;

un moyen de formation d'image (101) configuré pour former une image sur une feuille sur la base des données d'image ayant fait l'objet d'un tramage par le moyen de traitement d'image (317) ;

un moyen de mesure (200) configuré pour mesurer une image de mesure formée sur la feuille par le moyen de formation d'image (101) ;

un moyen d'acquisition (180) configuré pour recevoir, d'un utilisateur, une entrée du nombre de feuilles sur lesquelles l'image de mesure doit être formée ; et

un organe de commande (300) configuré pour commander le moyen de formation d'image (101) pour former une image de mesure sur une pluralité de feuilles, pour commander le moyen de mesure (200) pour mesurer l'image de mesure sur la pluralité de feuilles, et pour générer la condition de conversion sur la base d'un résultat de mesure du moyen de mesure (200),

dans lequel l'image de mesure comprend une première image de mesure (écran d'image) et une deuxième image de mesure (écran de texte),

dans lequel, dans un cas où l'organe de commande (300) commande le moyen de formation d'image (101) sur la base d'un mode prédéterminé pour former l'image de mesure, l'organe de commande (300) détermine, sur la base du nombre de feuilles sur lesquelles doit être formée l'image de mesure entré par l'utilisateur, le nombre de feuilles sur lesquelles une première image de mesure (écran d'image) doit être formée,

dans lequel, dans un cas où l'organe de commande (300) commande le moyen de formation d'image (101) sur la base du mode prédéterminé pour former l'image de mesure, le nombre de feuilles sur lesquelles doit être formée une deuxième image de mesure (écran de texte) correspond à un nombre prédéterminé,

dans lequel la première image de mesure (écran d'image) sert à générer une première condition de conversion correspondant au premier tramage, et

dans lequel la deuxième image de mesure (écran de texte) sert à générer une seconde condition de conversion correspondant au deuxième tramage.

**2.** Appareil de formation d'image selon la revendication 1,
dans lequel le premier tramage est un tramage à appliquer à des données d'image se rapportant à une image générée au moyen d'un langage de description de page, et
dans lequel le deuxième tramage est un tramage à appliquer à des données d'image se rapportant à un texte généré au moyen d'un langage de description de page.

**3.** Appareil de formation d'image selon la revendication 1, dans lequel, l'organe de commande (300) commande le moyen de formation d'image (101) sur la base du mode prédéterminé pour former les premières images de mesure (écran d'image) sur les premières feuilles et commande ensuite le moyen de formation d'image (101) pour former les deuxièmes images de mesure (écran de texte) sur les deuxièmes feuilles.

**4.** Appareil de formation d'image selon la revendication 1,
dans lequel le type de tramage comprend un troisième tramage différent du premier tramage et du deuxième tramage, et

15

dans lequel la pluralité de feuilles comprend en outre une troisième feuille comportant une troisième image de mesure, correspondant au troisième tramage, formé sur la troisième image de mesure.

5. Appareil de formation d'image selon la revendication 4, dans lequel, dans un cas où le moyen de formation d'image (101) est commandé sur la base du mode prédéterminé, l'organe de commande (300) commande le moyen de formation d'image pour former la première image de mesure (écran d'image) avant que le moyen de formation d'image (101) ne forme la troisième image de mesure.

6. Appareil de formation d'image selon la revendication 3, dans lequel, dans un cas où le moyen de formation d'image (101) est commandé sur la base du mode prédéterminé, l'organe de commande (300) commande le moyen de formation d'image (101) pour former la première image de mesure avant que le moyen de formation d'image ne forme la deuxième image de mesure.

7. Appareil de formation d'image selon la revendication 1, dans lequel, dans un cas où le moyen de formation d'image (101) est commandé sur la base du mode prédéterminé, l'organe de commande (300) génère la première condition de conversion sur la base d'un résultat de mesure de la première image de mesure formée sur les premières feuilles.

8. Appareil de formation d'image selon la revendication 1, dans lequel l'organe de commande (300) compare en outre des résultats de mesure de la première image de mesure (écran d'image) formée sur chacune des premières feuilles et, sur la base de résultats de comparaison, commande le fait qu'il convient, ou non, de mettre à jour la première condition de conversion.

9. Appareil de formation d'image selon la revendication 1, dans lequel le premier tramage est un tramage faisant appel à un écran de modulation d'amplitude (AM).

10. Appareil de formation d'image selon la revendication 9, dans lequel le deuxième tramage est un tramage faisant appel à l'écran d'AM, et dans lequel le nombre de lignes d'un écran destiné au premier tramage est inférieur au nombre de lignes d'un écran destiné au deuxième tramage.

11. Appareil de formation d'image selon la revendication 1, dans lequel le deuxième tramage est un tramage à appliquer à des données d'image transférées depuis un appareil de lecture dans un mode de copie.

FIG. 1

FIG. 2

# FIG. 3

# FIG. 4

| NAME | ERROR DIFFUSION | COPY | PDL IMAGES (AND GRAPHICS) | PDL Text |
|---|---|---|---|---|
| FEATURE | NONPERIODIC | 170-LPI LINE GROWTH | 189-LPI DOT GROWTH | 283-LPI DOT GROWTH |
| | | | | |

# FIG. 5

```
              ┌─────────────┐
              │    START    │
              └─────────────┘
                     │
                     ▼
              ╱───────────────╲      S100
            ╱                   ╲
           ╱     PRINTING?       ╲──── NO ──────────────┐
            ╲                   ╱                        │
              ╲───────────────╱                         │
                     │                                  ▼
                    YES                          ┌──────────────┐   S103
                     │                           │ SELECT  COPY │
                     ▼                           │   SCREEN     │
              ┌─────────────┐                    └──────────────┘
              │   ANALYZE   │   S101                    │
              │ IMAGE DATA  │                           │
              └─────────────┘                           │
                     │                                  │
                     ▼                                  │
              ┌─────────────┐                           │
              │SELECT SCREEN│   S102                     │
              └─────────────┘                           │
                     │                                  │
                     ▼◄─────────────────────────────────┘
              ┌─────────────┐
              │PERFORM TONE │   S104
              │ CORRECTION  │
              └─────────────┘
                     │
                     ▼
              ┌─────────────┐
              │   PERFORM   │   S105
              │ HALFTONING  │
              └─────────────┘
                     │
                     ▼
              ┌─────────────┐
              │ FORM IMAGE  │   S106
              └─────────────┘
                     │
                     ▼
              ┌─────────────┐
              │     END     │
              └─────────────┘
```

# FIG. 6

```
char_color={0.0,0.0,0.0,1.0};
91  string1="IC";
    put_char(0.0,0.0,0.3,0.1,string1);

    line_color={1.0,0.0,0.0,0.0};
92  put_char(0.9,0.0,00.9,1.0,0.1);

    image1={CMYK,8,5,5,C0,M0,Y0,K0
                        C1,M1,Y1,K1,

                            .
                            .
93                          .

                        C24,M24,Y24,K24};
    put_image(0.0,0.5,0.5,0.5,image1);
```

FIG. 7

START

FORM MEASURING
IMAGE D — S201

MEASURE MEASURING
IMAGE D — S202

ADJUST LPW — S203

S204

NO ← N > 1?

YES

FORM MEASURING
IMAGE A
(IMAGE SCREEN) — S205

MEASURE MEASURING
IMAGE A — S206

S207

NO ← N − 1 SHEETS?

YES

FORM MEASURING
IMAGE F1
(ERROR DIFFUSION) — S208

MEASURE MEASURING
IMAGE F1 — S209

FORM MEASURING
IMAGE F2
(COPY SCREEN) — S210

MEASURE MEASURING
IMAGE F2 — S211

FORM MEASURING
IMAGE F3
(IMAGE SCREEN) — S212

MEASURE MEASURING
IMAGE F3 — S213

FORM MEASURING
IMAGE F4
(TEXT SCREEN) — S214

MEASURE MEASURING
IMAGE F4 — S215

GENERATE $\gamma$ LUT — S216

END

23

FIG. 8

FIG. 9

# FIG. 10

CONVEYANCE DIRECTION

K C M Y

# FIG. 11

# FIG. 12

```
                        START

                         │
                         ▼          S300
                    ╱─────────╲
                   ╱            ╲        NO
                  ╱ MEASUREMENT  ╲──────────────────────────┐
                  ╲   ERROR?     ╱                           │
                   ╲            ╱                            │
                    ╲──────────╱                            ▼          S301
                         │                         ┌────────────────────┐
                        YES                        │ USE MEASUREMENT     │
                         │           S302          │ RESULTS OF MEASURING│
                         ▼                          │ IMAGES A AND F3    │
                    ╱─────────╲                     └────────────────────┘
                   ╱            ╲                            │
                  ╱ MEASUREMENT  ╲       NO                  │
                  ╲ ERROR IN MEASURING ╲──────┐             │
                  ╱  IMAGE F3?   ╱             │             │
                   ╲            ╱              ▼     S303     │
                    ╲──────────╱      ┌────────────────────┐ │
                         │            │ USE MEASUREMENT     │ │
                        YES           │ RESULT OF MEASURING │ │
                         │    S304    │ IMAGE F3            │ │
                         ▼            └────────────────────┘ │
              ┌────────────────┐              │             │
              │ DO NOT UPDATE  │              │             │
              │   γ LUT        │              │             │
              └────────────────┘              │             │
                         │                    │             │
                         │◄───────────────────┴─────────────┘
                         ▼

                        END
```

FIG. 13

FIG. 14

| 1 | 2 | 3 | 4 | 5 |
|---|---|---|---|---|
| K Y M C | K C M Y | K C M Y | K C M Y | K C M Y |
| MAXIMUM DENSITY CORRECTION | IMAGE SCREEN | IMAGE SCREEN | IMAGE SCREEN | IMAGE SCREEN |

| 6 | 7 | 8 | 9 |
|---|---|---|---|
| K C M Y | K C M Y | K C M Y | K C M Y |
| ERROR DIFFUSION | COPY SCREEN | IMAGE SCREEN | TEXT SCREEN |

EP 3 209 011 B1

FIG. 15

FIG. 16

FIG. 17

180

AUTOMATIC TONE
CORRECTION

RETURN

182

181

SET
MULTIPLE
SHEETS

START

EP 3 209 011 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011199409 A

- EP 2733917 A